# EUROPÄISCHE PATENTSCHRIFT

(11) **EP 4 539 974 B1**
(45) Veröffentlichungstag und Bekanntmachung des Hinweises auf die Patenterteilung: **15.10.2025**
(21) Anmeldenummer: 24733131.7
(22) Anmeldetag: 13.06.2024
(51) Int. Cl.: B01J 2/00, B01J 2/12, F26B 13/16

(54) **VORRICHTUNG ZUM BEHANDELN VON MAKROSKOPISCHEN TEILEN**
DEVICE FOR TREATING MACROSCOPIC PARTS
DISPOSITIF DE TRAITEMENT DE PIÈCES MACROSCOPIQUES

(30) Priorität: 16.06.2023 DE 102023115766
(43) Veröffentlichungstag der Anmeldung: 23.04.2025
(73) Patentinhaber: SciTech Europe GmbH, 79379 Müllheim (DE)
(72) Erfinder: MAURER, Frank, 79594 Inzlingen (DE); WEISS, Björn, 79418 Schliengen (DE)
(74) Vertreter: RACKETTE Patentanwälte PartG mbB
(86) Internationale Anmeldenummer: PCT/EP2024/066301
(87) Internationale Veröffentlichungsnummer: WO 2024/256506

(56) Entgegenhaltungen:
- DE-A1- 10 024 407
- DE-A1- 102012 011 286
- US-A- 3 140 157
- US-A1- 2021 354 167

## Beschreibung

Die Erfindung betrifft eine Vorrichtung zum Behandeln von makroskopischen Teilen gemäß dem Oberbegriff des Anspruchs 1.

Eine derartige Vorrichtung ist aus DE 100 24 407 A1 bekannt. Bei der vorbekannten Vorrichtung zum Behandeln von makroskopischen Teilen ist eine Zuluftzuführungsanordnung vorhanden, die an einer Abschlusswand angebracht ist. Weiterhin verfügt die Vorrichtung über eine Behandlungstrommel, die mit der Zuluftzuführungsanordnung fluidmechanisch in Verbindung steht. Bei einer Zwischenplatte, die fluidmechanisch zwischen der Zuluftzuführungsanordnung und der Behandlungstrommel angeordnet ist, sind eine Anzahl von Freimachungen zum Ausbilden einer direkten fluidmechanischen Verbindung zwischen der Zuluftzuführungsanordnung sowie der Behandlungstrommel ausgebildet, wobei eine Gesamtfläche der insgesamt vorhandenen Freimachungen größer als eine Einlassfläche der Zuluftzuführungsanordnung ist. Die Zuluftzuführungsanordnung mündet unmittelbar vor einer vorbestimmten Auswahl an Freimachungen der Anzahl von Freimachungen, so dass die durch die Zuluftzuführungsanordnung beaufschlagte, fluiddynamisch effektiv wirksame Fläche der von Zuluft tatsächlich beaufschlagten Freimachungen kleiner als die Einlassfläche der Zuluftzuführungsanordnung ist.

Eine weitere Vorrichtung zum Behandeln von makroskopischen Teilen wie insbesondere Tabletten ist aus DE 24 45 102 A1 bekannt. Bei dieser vorbekannten Vorrichtung sind eine Zuluftzuführungsanordnung und eine Behandlungstrommel vorgesehen, wobei die Behandlungstrommel mit der Zuluftzuführungsanordnung fluidmechanisch in Verbindung steht. Weiterhin ist eine Zwischenplatte vorhanden, die fluidmechanisch zwischen der Zuluftzuführungsanordnung und der Behandlungstrommel angeordnet ist. Die Zwischenplatte ist mit einer Anzahl von Freimachungen zum Ausbilden einer fluidmechanischen Verbindung zwischen der Zuluftzuführungsanordnung und der Behandlungstrommel ausgebildet.

Eine weitere Vorrichtung zum Behandeln von makroskopischen Teilen ist aus DE 10 2012 011 286 A1 bekannt. Bei dieser vorbekannten Vorrichtung zum Behandeln von makroskopischen Teilen wie insbesondere Tabletten sind eine Zuluftzuführungsanordnung und eine Behandlungstrommel vorgesehen, wobei die Behandlungstrommel mit der Zuluftzuführungsanordnung fluidmechanisch in Verbindung steht. Weiterhin ist eine Zwischenplatte vorhanden, die fluidmechanisch zwischen der Zuluftzuführungsanordnung und der Behandlungstrommel angeordnet ist. Die Zwischenplatte ist mit einer Anzahl von Freimachungen zum Ausbilden einer fluidmechanischen Verbindung zwischen der Zuluftzuführungsanordnung und der Behandlungstrommel ausgebildet. Eine lichte Gesamtfläche der Freimachungen ist bei der vorbekannten Vorrichtung kleiner als eine Einlassfläche der Zuluftzuführungsanordnung.

Aus DE 10 2005 028 168 B3 und EP 2 289 614 A1 sind Einrichtungen zur Führung eines Gases für Vorrichtungen zum Behandeln körnigen Gutes bekannt, die über eine Behandlungstrommel und über eine Zuluftzuführungsanordnung verfügen. Die jeweilige Zuluftzuführungsanordnung ist mit einem in Strömungsrichtung abwärts und damit in Strömungsrichtung rückseitig einer Zwischenplatte liegenden Endabschnitt innerhalb der Behandlungstrommel angeordnet, aus dem Zuluft zum Behandeln von körnigem Gut austritt.

Der Erfindung liegt die Aufgabe zugrunde, eine Vorrichtung der eingangs genannten Art anzugeben, die sich durch eine verhältnismäßig einfache Herstellung, eine relativ lange Standzeit sowie eine homogene Verteilung von Zuluft in der Behandlungstrommel auszeichnet.

Diese Aufgabe wird bei einer Vorrichtung der eingangs genannten Art erfindungsgemäß mit den kennzeichnenden Merkmalen des Anspruchs 1 gelöst.

Dadurch, dass bei der Vorrichtung gemäß der Erfindung die Gesamtfläche der Freimachungen größer als eine fluidmechanisch insgesamt wirksame Einlassfläche der Zuluftzuführungsanordnung ist und dass eine Zuluftzuführungsanordnung mit einem Einlassströmungsumlenkteil vorhanden ist, mit dem Zuluft in der Regel ausgehend von einer axialen Strömungsrichtung parallel zu der Zwischenplatte in eine Strömung mit wenigstens einer radialen Richtung kontrolliert umlenkbar ist, lässt sich diese Vorrichtung bei einer guten Homogenisierung von durch die Zwischenplatte in die Behandlungstrommel eingetragener Zuluft verhältnismäßig einfach herstellen sowie relativ lange weitgehend frei von unerwünschten Ablagerungen betreiben.

Weitere zweckmäßige Ausgestaltungen der Erfindung sind Gegenstand der abhängigen Ansprüche.

Weitere zweckmäßige Ausgestaltungen und Vorteile der Erfindung ergeben sich aus der nachfolgenden Beschreibung von Ausführungsbeispielen mit Bezug auf die Figuren der Zeichnung.

Es zeigen:
- Fig. 1: in einer perspektivischen, teilweise aufgeschnittenen Ansicht ein erstes Ausführungsbeispiel einer Vorrichtung gemäß der Erfindung,
- Fig. 2: in einer weiteren perspektivischen, teilweise aufgeschnittenen Ansicht das erste Ausführungsbeispiel gemäß Fig. 1,
- Fig. 3: in einer perspektivischen Ansicht eine Zwischenplatte mit einem Einlassströmungsumlenkteil,
- Fig. 4: in einer perspektivischen geschnittenen Ansicht das Einlassströmungsumlenkteil gemäß Fig. 4,
- Fig. 5: in einer perspektivischen Ansicht eine Zwischenplatte des ersten Ausführungsbeispiels gemäß Fig. 1 und Fig. 2,
- Fig. 6: in einer perspektivischen Ansicht eine weitere Ausführung einer Zwischenplatte mit Blick auf eine einer Zuluftzuführungsanordnung zugewandte Seite,
- Fig. 7: in einer weiteren perspektivischen Ansicht die Ausführung einer Zwischenplatte gemäß Fig. 6 mit Blick auf eine einer Zuluftzuführungsanordnung abgewandte Seite,
- Fig. 8: in einer perspektivischen Ansicht eine weitere Ausführung einer Zwischenplatte mit einem Einlassströmungsumlenkteil und
- Fig. 9: in einer weiteren perspektivischen Ansicht eine weitere Ausführung einer Zwischenplatte.

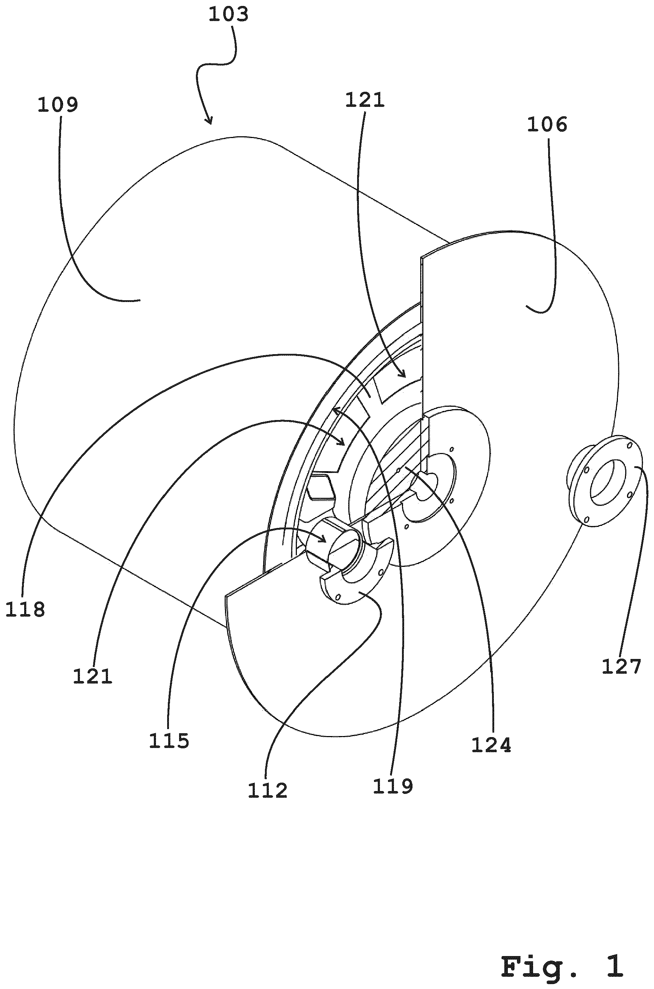

Fig. 1 zeigt in einer teilweise geschnittenen perspektivischen Ansicht ein Ausführungsbeispiel einer Vorrichtung gemäß der Erfindung, die zum Behandeln von makroskopischen Teilen wie insbesondere Tabletten in der Pharmazie sowie in pharmazeutischen industriellen Prozessen eingerichtet ist und auch als Coater 103 bezeichnet wird. Der Coater 103 gemäß dem Ausführungsbeispiel gemäß Fig. 1 verfügt über eine in der Ansicht gemäß Fig. 1 dem Betrachter zugewandte Abschlusswand 106, die eine zylinderartig ausgebildete Außenwand 109 an einer Stirnseite abschließt. An der Abschlusswand 106 ist ein eine Einlassfläche aufweisender Zuluftflansch 112 einer Zuluftzuführungsanordnung angebracht, der üblicherweise rechtwinklig zu der Außenwand 109 ausgerichtet ist und somit Zuluft in einer axialen Richtung führt. Der Zuluftflansch steht stromabwärts mit einem Einlassströmungsumlenkteil 115 der Zuluftzuführungsanordnung fluidmechanisch in Verbindung.

Auf der dem Zuluftflansch 112 abgewandten Seite des Einlassströmungsumlenkteils 115 ist eine Zwischenplatte 118 angeordnet, die zweckmäßigerweise mit einem bei bestimmungsgemäßer Anordnung in Richtung der Abschlusswand 106 vorstehenden Außenrand 119 in axialer Richtung an der Abschlusswand 106 anliegt und die mit einer Anzahl von Freimachungen 121 ausgebildet ist, um eine fluidmechanische Verbindung zwischen dem Zuluftflansch 112 und einem durch die Außenwand 109 auf der der Abschlusswand 106 abgewandten Seite der Zwischenplatte 118 ausgebildeten, durch die Außenwand 109 umschlossenen Innenraum zu schaffen.

Die Zwischenplatte 118 umgibt radial innenseitig einen Befestigungssockel 124, durch den die Abschlusswand 106 gehalten ist.

Weiterhin ist an der Abschlusswand 106 ein Abluftflansch 127 angebracht, der dazu vorgesehen ist, über den Zuluftflansch 112 zugeführte Zuluft wieder aus dem Coater 103 abzuführen.

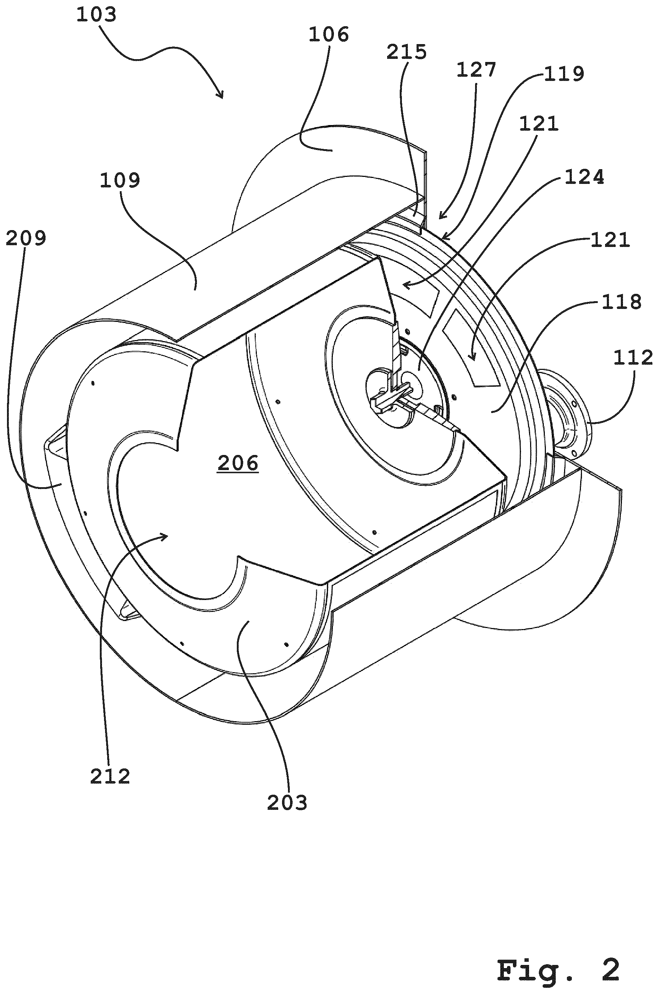

Fig. 2 zeigt in einer weiteren perspektivischen, teilweise geschnittenen Ansicht das Ausführungsbeispiel gemäß Fig. 1, wobei eine die Außenwand 109 auf der der Abschlusswand 106 gegenüberliegenden Stirnseite abschließende Beschickungswand nicht dargestellt ist. Aus der Darstellung gemäß Fig. 2 ist ersichtlich, dass die Außenwand 109 eine zylinderartig ausgebildete Behandlungstrommel 203 umschließt, die an dem Befestigungssockel 124 drehbar gelagert ist.

Ein von der Behandlungstrommel 203 umschlossener Behandlungsraum 206 steht fluidmechanisch über in Fig. 2 nicht dargestellte Perforierungen mit dem Zuluftflansch 112 sowie über einen zwischen der Außenseite der Behandlungstrommel 203 und der Außenwand 109 angeordneten Abluftschuh 209 mit dem in der Ansicht gemäß Fig. 2 nicht sichtbaren Abluftflansch 127 in Verbindung.

Im Betrieb des Coaters 103 sind über eine in der Behandlungstrommel 203 auf der dem Befestigungssockel 124 abgewandten Stirnseite angebrachte Beschickungsausnehmung 212 und eine in der in Fig. 2 nicht dargestellten Beschickungswand eingebrachte, verschließbare Beschickungsöffnung makroskopische Partikel wie insbesondere Tabletten zur Behandlung wie beispielsweise Beschichten einbringbar.

Bei einem derartigen Prozess ist es zum Vermeiden von Ablagerungen in Bereichen mit verhältnismäßig geringen Strömungsgeschwindigkeiten oder in Bereichen mit Verwirbelungen geboten, einen Eintrag von Zuluft durch den Zuluftflansch 112 über die Zwischenplatte 118 möglichst homogen zu gestalten, um eine möglichst hohe Standzeit sowie einen möglichst geringen Reinigungsaufwand zu haben.

Weiterhin lässt sich der Darstellung gemäß Fig. 2 entnehmen, dass der Außenrand 119 der Zwischenplatte 118 zweckmäßigerweise mittels eines in Umfangsrichtung umlaufenden, geschlossenen Haltekragens 215, der mit der Abschlusswand 106 verbunden ist, lösbar mit der Abschlusswand 106 verbunden ist.

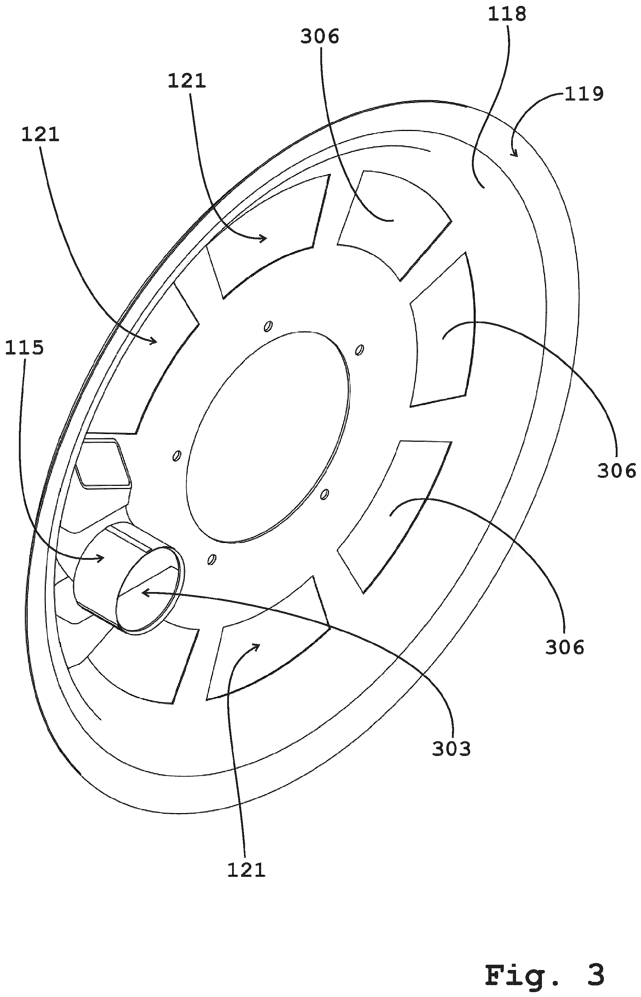

Fig. 3 zeigt in einer perspektivischen Ansicht die Ausführung der Zwischenplatte 118 bei dem anhand Fig. 1 und Fig. 2 erläuterten Ausführungsbeispiel. Aus Fig. 3 ist ersichtlich, dass die Freimachungen 121 ringartig in Umfangsrichtung beidseitig des Einlassströmungsumlenkteils 115 ausgebildet sind. Die Gesamtfläche der Freimachungen 121 ist dabei größer, in der Ausführung der Zwischenplatte 118 gemäß Fig. 3 um ein Vielfaches größer, als eine fluidmechanisch insgesamt wirksame Einlassfläche 303 des Einlassströmungsumlenkteils 115.

Bei der Zwischenplatte in der Ausführung gemäß Fig. 3 sind die Freimachungen 121 mit Strömungsbremseinsätzen 306 als Strömungshomogenisatorelemente einem Homogenisieren der Strömung an Zuluft bedeckt, die beispielsweise durch perforierte oder nach Art eines Nasenblechs, auch als Schuppenblech bezeichnet, mit einer sogenannten "ConiPerf^{®}"-Struktur in Gestalt von Lochungen mit erhabenen Begrenzungen ausgebildet. Die Strömungsbremseinsätze 306 sind bei der Ausführung der Zwischenplatte 118 gemäß Fig. 3 entlang des Randes der Freimachungen 121 unlösbar beispielsweise durch Schweißen befestigt.

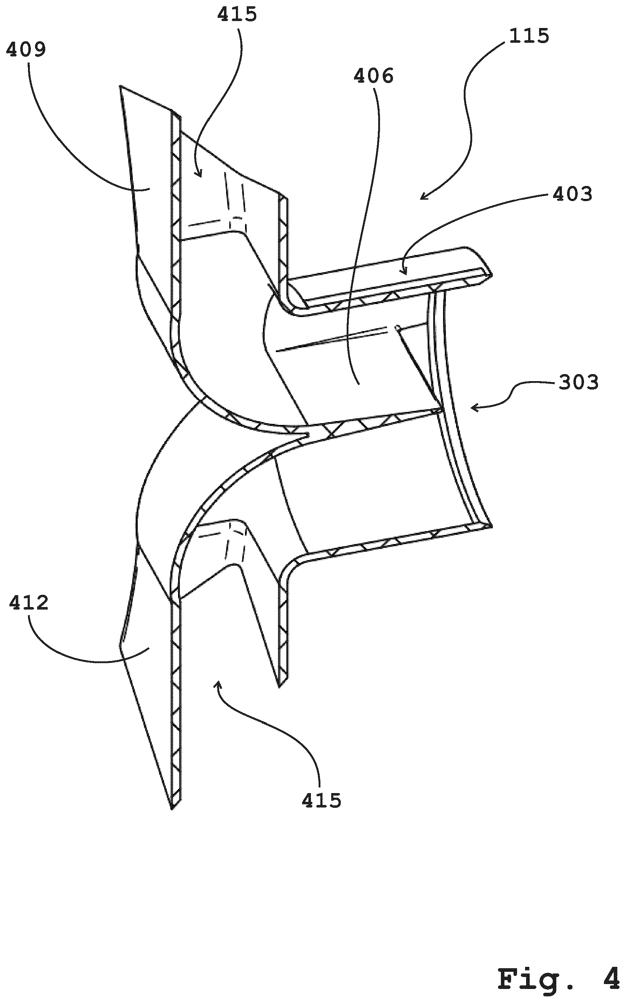

Fig. 4 zeigt in einer perspektivischen, geschnittenen Ansicht eine Ausführung des Einlassströmungsumlenkteils 115 gemäß dem anhand Fig. 1 bis Fig. 3 erläuterten Ausführungsbeispiel. Das Einlassströmungsumlenkteil 115 ist mit einem zylinderartig ausgebildeten Einlasshalsstück 403 ausgebildet, welches sich bei bestimmungsgemäßer Anordnung an den Zuluftflansch 112 anschließt und über die Einlassfläche 303 Zuluft einlässt. Auf einem Durchmesser des Einlasshalsstückes 403 ist eine Trennwand 406 ausgebildet, die den Innenraum des Einlasshalsstückes 403 quert und den Querschnitt der Einlassfläche 303 aufteilt, insbesondere halbiert.

An das Einlasshalsstück 403 setzen sich ein erstes Auslasshalsstück 409 und ein zweites Auslasshalsstück 412 an, die winklig, vorzugsweise rechtwinklig, zu dem Einlasshalsstück 403 ausgerichtet sind und über jeweils einen Zuluftauslassbereich 415 die über die Einlassfläche 303 in axialer Richtung strömende Zuluft aufteilen sowie in zwei radiale Richtungen mit einer Strömungskomponente parallel zu der Zwischenplatte 118 umlenken.

Bei der vorgenannten Ausführung eines Einlassströmungsumlenkteils 115 ist der Anschluss an den Zuluftflansch 112 durch das eine einzige Einlasshalsstück 403 besonders einfach zu bewerkstelligen.

Bei einer zu der vorgenannten Ausführung weiteren, nicht dargestellten Ausführung einer Zuluftzuführungsanordnung ist ein aus Handhabungsgründen zweckmäßigerweise einteiliges Einlassströmungsumlenkteil mit einer Anzahl von, beispielsweise zwei, Einlasshalsstücken und mit einer der Anzahl der Einlasshalsstücke entsprechenden Anzahl von Auslasshalsstücken vorgesehen, die mit jeweils einem Einlasshalsstück rohrartig fluidmechanisch in Verbindung stehen und winklig, vorzugsweise rechtwinklig, zu dem jeweiligen Einlasshalsstück ausgerichtet sind und über jeweils einen Zuluftauslassbereich die über das jeweilige Einlasshalsstück eingetretene Zuluft in wenigstens eine radiale Richtung mit einer Strömungskomponente parallel zu der Zwischenplatte 118 umlenken. Dabei ist die Gesamtfläche der Freimachungen 121 größer, zweckmäßigerweise um ein Vielfaches größer, als eine aus den Einlassflächen der einzelnen Einlasshalsstücke gebildete, fluidmechanisch insgesamt wirksame Einlassfläche des Einlassströmungsumlenkteils.

Bei der letztgenannten weiteren Ausführung mit rohrartig miteinander verbundenen Einlasshalsstücken und Auslasshalsstücken lässt sich eine Strömung in mehreren radialen Richtungen fächerartig beispielsweise über einen Winkelbereich von bis zu 360 Grad einrichten.

Auf diese Weise ergibt sich bei allen Ausführungen von Strömungsumlenkteilen 115 auch bei verhältnismäßig hohen Strömungsgeschwindigkeiten von Zuluft durch die kontrolliert geführte Umlenkung von einer insbesondere axialen Richtung in wenigstens eine radiale Richtung parallel zu der Zwischenplatte 118 eine relativ homogene Verteilung des Stromes an Zuluft in dem zwischen der Abschlusswand 106 und der Zwischenplatte 118 ausgebildeten Zwischenraum.

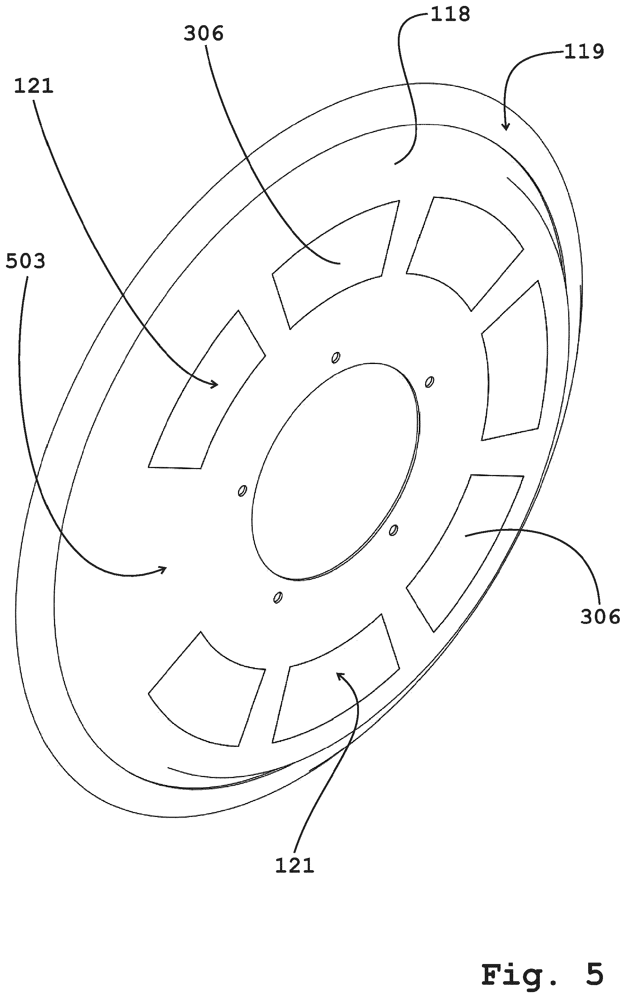

Fig. 5 zeigt in einer perspektivischen Ansicht eine weitere Ausführung einer Zwischenplatte 118, die insbesondere bei verhältnismäßig geringen Strömungsgeschwindigkeiten bei der Zufuhr von Zuluft Verwendung findet. Bei der Ausführung der Zwischenplatte 118 gemäß Fig. 5 ist ein zwischen in Umfangsrichtung benachbarten Freimachungen 121 ausgebildeter Zwischenbereich als Zuluftauftreffbereich 503 verhältnismäßig großflächig ausgebildet und dem Zuluftflansch 112 gegenüberliegend angeordnet. Dadurch ergibt sich auch ohne ein separates Einlassströmungsumlenkteil 115 eine Umlenkung der durch den Zuluftflansch 112 zugeführten Zuluft.

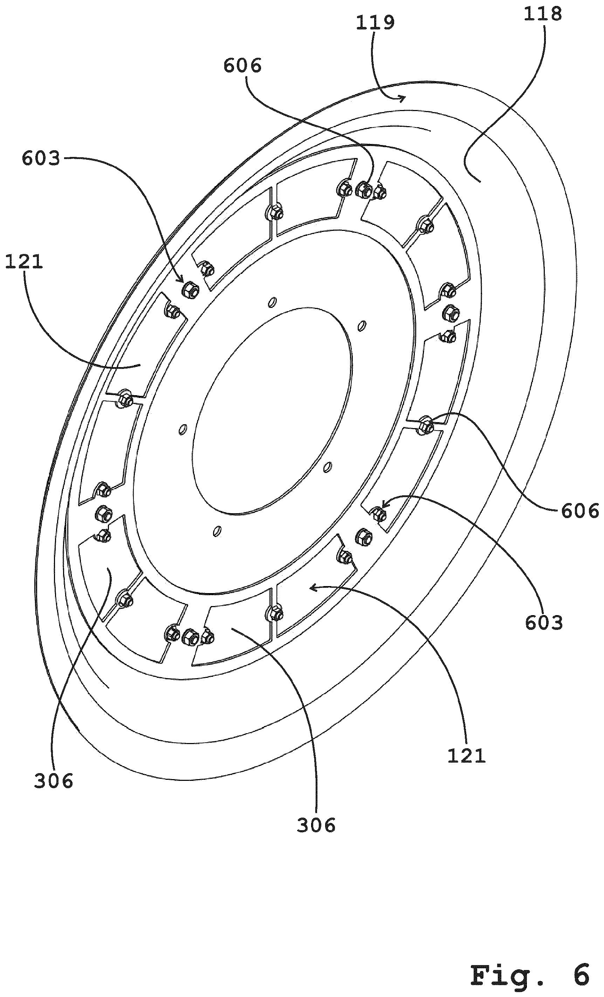

Fig. 6 zeigt in einer perspektivischen Ansicht eine weitere Ausführung einer Zwischenplatte 118, bei der als Abwandlung von der anhand Fig. 3 erläuterten Zwischenplatte 118 die Strömungsbremseinsätze 306 im Bereich der Freimachungen 121 lösbar angebracht sind.

Bei der Ausführung gemäß Fig. 6 erfolgt die Befestigung der Strömungsbremseinsätze 306 über im Umfangsrichtung randseitig der Freimachungen 121 positionierte Schraubverbindungen 603. Aus der Ansicht gemäß Fig. 6, die bei bestimmungsgemäßer Anordnung die der Abschlusswand 106 zugewandte Seite der Zwischenplatte 118 zeigt, ist ersichtlich, dass Muttern 606 der Schraubverbindung in dem zwischen der Abschlusswand 106 und der Zwischenplatte 118 zugewandten Zwischenraum angeordnet sind, da hier die Gefahr von Ablagerungen im Bereich der kantigen Muttern 606 verhältnismäßig gering ist.

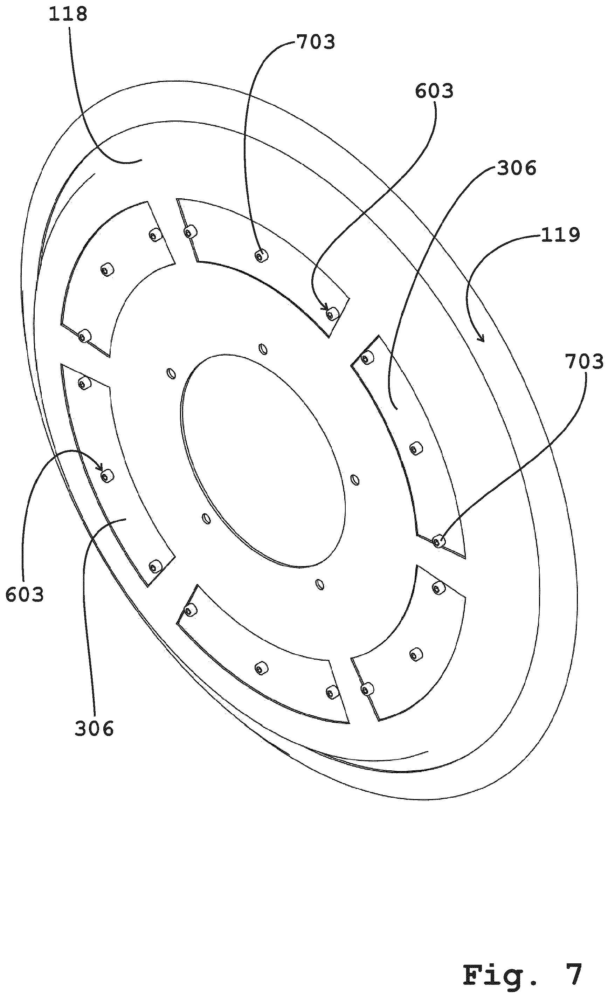

Fig. 7 zeigt die Ausgestaltung der mit lösbaren Strömungsbremseinsätzen 306 ausgebildeten Zwischenplatte 118 gemäß Fig. 6 mit Blick auf die der Abschlusswand 106 abgewandte und der Behandlungstrommel 203 zugewandte Seite. Aus Fig. 7 ist ersichtlich, dass Schraubenköpfe 703 von Schrauben der Schraubverbindungen 603 außenseitig glattwandig mit einer mittigen Formschlussvertiefung ausgebildet sind, um das Ablagern von Material möglichst zu vermeiden und eine möglichst einfache Reinigung zu ermöglichen.

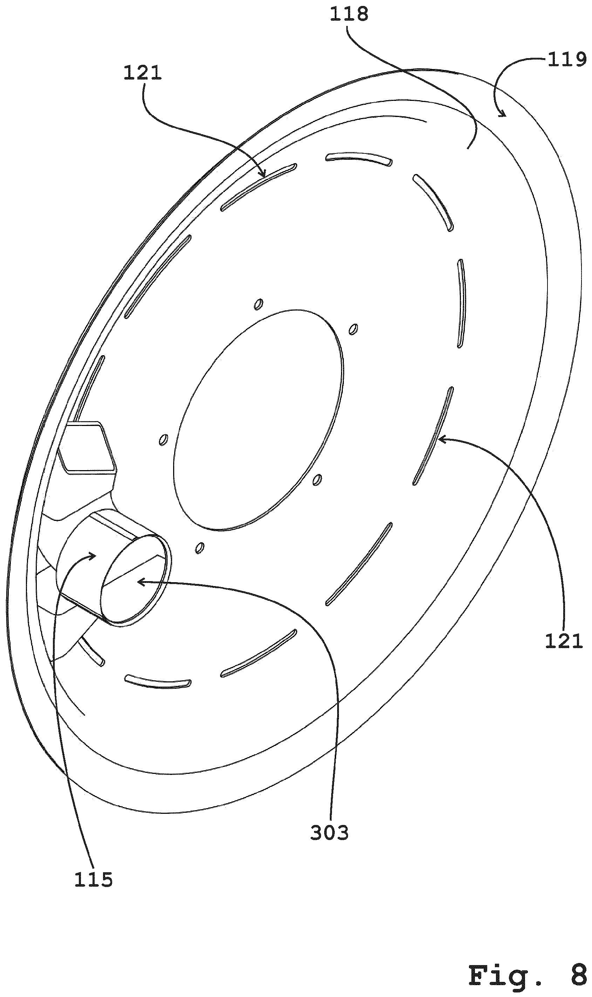

Fig. 8 zeigt in einer perspektivischen Ansicht eine Abwandlung der anhand Fig. 3 erläuterten, mit einem Einlassströmungsumlenkteil 115 bestückten Zwischenplatte 118. Bei der Abwandlung gemäß Fig. 8 ist die Gesamtfläche der Freimachungen 121 um lediglich einen Bruchteil, also eine Zahl kleiner 1, größer als die Einlassfläche 303 des Einlassströmungsumlenkteils 115, wobei zum Erzielen eines noch ausreichenden Durchsatzes von Zuluft durch die Zwischenplatte 118 die Freimachungen 121 unbedeckt sind.

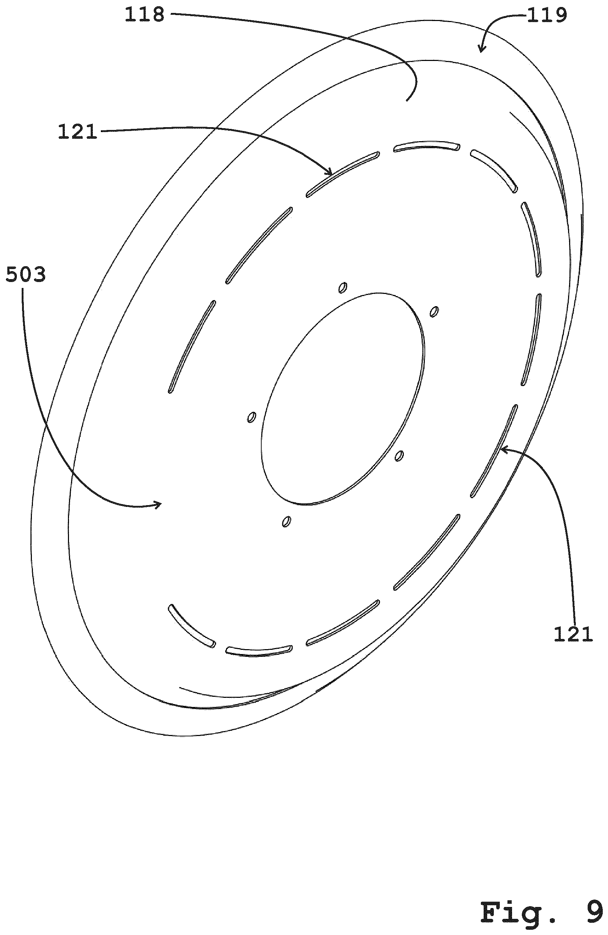

Fig. 9 zeigt in einer perspektivischen Ansicht die Ausgestaltung einer Zwischenplatte 118 entsprechend der Ausgestaltung einer Zwischenplatte 118 gemäß Fig. 5 mit einem Zuluftauftreffbereich 503 sowie den verhältnismäßig kleinen, unbedeckten Freimachungen 121 gemäß der Ausgestaltung gemäß Fig. 8. Diese Ausgestaltung zeichnet sich ebenfalls durch eine gute Homogenisierung bei der Zufuhr von Zuluft in den Bereich der Behandlungstrommel 203 aus.

Es versteht sich, dass die Ausbildung von Einlassströmungsumlenkteilen 115 sowie die Ausbildung und Anordnung von Freimachungen 121 mit und ohne Strömungsbremseinsätzen 306 wahlweise voneinander unabhängig vorgenommen werden kann.

## Patentansprüche

1. Vorrichtung zum Behandeln von makroskopischen Teilen mit einer Zuluftzuführungsanordnung (112, 115), die an einer Abschlusswand (106) angebracht ist, mit einer Behandlungstrommel (203), die mit der Zuluftzuführungsanordnung (112, 115) fluidmechanisch in Verbindung steht, mit einer Zwischenplatte (118), die fluidmechanisch zwischen der Zuluftzuführungsanordnung (112, 115) und der Behandlungstrommel (203) angeordnet und die mit einer Anzahl von Freimachungen (121) zum Ausbilden einer fluidmechanischen Verbindung zwischen der Zuluftzuführungsanordnung (112, 115) sowie der Behandlungstrommel (203) ausgebildet ist, wobei eine Gesamtfläche der Freimachungen (121) größer als eine Einlassfläche (303) der Zuluftzuführungsanordnung (112, 115) ist, **dadurch gekennzeichnet, dass** die Zuluftzuführungsanordnung (112, 115) ein Einlassströmungsumlenkteil (115) aufweist, das dazu eingerichtet ist, über einen Zuluftauslassbereich (415) Zuluft parallel zu der Zwischenplatte (118) mit wenigstens einer radialen Strömungskomponente in einen zwischen der Abschlusswand (106) und der Zwischenplatte (118) ausgebildeten Zwischenraum umzulenken, so dass sich eine homogene Verteilung des Stromes an Zuluft in dem Zwischenraum ergibt.

2. Vorrichtung nach Anspruch 1, **dadurch gekennzeichnet, dass** das Einlassströmungsumlenkteil (115) mit einem Einlasshalsstück (403) sowie mit einem ersten Auslasshalsstück (409) und mit einem zweiten Auslasshalsstück (412) ausgebildet ist, wobei die Auslasshalsstücke (409, 412) winklig an das Einlasshalsstück (403) angesetzt sind.

3. Vorrichtung nach Anspruch 1, **dadurch gekennzeichnet, dass** das Einlassströmungsumlenkteil mit einer Anzahl von Einlasshalsstücken sowie mit einer Anzahl von Auslasshalsstücken ausgebildet ist, wobei jedes Auslasshalsstück rohrartig mit einem Einlasshalsstück in Verbindung steht und winklig an das betreffende Einlasshalsstück angesetzt ist.

4. Vorrichtung nach einem der Ansprüche 1 bis 3, **dadurch gekennzeichnet, dass** die Freimachungen (121) beidseitig der Zuluftzuführungsanordnung (112, 115) in Umfangsrichtung gleichmäßig verteilt sind.

5. Vorrichtung nach einem der Ansprüche 1 bis 4, **dadurch gekennzeichnet, dass** im Bereich der Zuluftzuführungsanordnung (112, 115) die Zwischenplatte (118) in einem Zuluftauftreffbereich (503) frei von Freimachungen (121) ist.

6. Vorrichtung nach einem der Ansprüche 1 bis 5, **dadurch gekennzeichnet, dass** die Gesamtfläche der Freimachungen (121) um einen Bruchteil größer als die Einlassfläche (303) der Zuluftzuführungsanordnung (112, 115) ist.

7. Vorrichtung nach einem der Ansprüche 1 bis 5, **dadurch gekennzeichnet, dass**
Strömungshomogenisatorelemente (306) vorhanden sind, die Freimachungen (121) überdecken.

8. Vorrichtung nach Anspruch 7, **dadurch gekennzeichnet, dass** die Gesamtfläche der Freimachungen (121) um ein Vielfaches größer als die Einlassfläche (303) der Zuluftzuführungsanordnung (112, 115) ist.

9. Vorrichtung nach einem der Ansprüche 1 bis 8, **dadurch gekennzeichnet, dass** ein Außenrand (119) der Zwischenplatte (118) mittels eines in Umfangsrichtung umlaufenden, geschlossenen Haltekragens (215) lösbar mit einer Abschlusswand (106) verbunden ist.

## Claims

1. Device for treating macroscopic parts having a supply air supply arrangement (112, 115) which is mounted on an end wall (106), having a treatment drum (203) which is fluid-mechanically connected to the supply air supply arrangement (112, 115), having an intermediate plate (118) which is fluid-mechanically arranged between the supply air supply arrangement (112, 115) and the treatment drum (203) and which is formed with a number of clearances (121) for forming a fluid-mechanical connection between the supply air supply arrangement (112, 115) and the treatment drum (203), a total area of the clearances (121) being larger than an inlet surface (303) of the supply air supply arrangement (112, 115), **characterised in that the** supply air supply arrangement (112, 115) has an inlet flow deflection part (115) which is designed to divert supply air via a supply air outlet area (415) parallel to the intermediate plate (118) with at least one radial flow component into an intermediate space formed between the end wall (106) and the intermediate plate (118), such that a homogeneous distribution of the flow of supply air results in the intermediate space.

2. Device according to claim 1, **characterised in that** the inlet flow deflection part (115) comprises an inlet neck piece (403) and a first outlet neck piece (409) and a second outlet neck piece (412), wherein the outlet neck pieces (409, 412) are attached to the inlet neck piece (403) at an angle.

3. Device according to claim 1, **characterised in that** the inlet flow deflection part is formed with a number of inlet neck pieces and with a number of outlet neck pieces, each outlet neck piece being connected in a tubular manner to an inlet neck piece and being attached at an angle to the respective inlet neck piece.

4. Device according to one of claims 1 to 3, **characterised in that** the clearances (121) are evenly distributed on both sides of the supply air supply arrangement (112, 115) in the circumferential direction.

5. Device according to one of claims 1 to 4, **characterised in that** in the area of the supply air supply arrangement (112, 115), the intermediate plate (118) is free of clearances (121) in a supply air impact region (503).

6. Device according to one of claims 1 to 5, **characterised in that** the total area of the clearances (121) is a fraction larger than the inlet area (303) of the supply air supply arrangement (112, 115).

7. Device according to one of claims 1 to 5, **characterised in that**
flow homogeniser elements (306) are present, which cover clearances (121).

8. Device according to claim 7, **characterised in that** the total area of the clearances (121) is many times larger than the inlet area (303) of the supply air supply arrangement (112, 115).

9. Device according to one of claims 1 to 8, **characterised in that** an outer edge (119) of the intermediate plate (118) is detachably connected to an end wall (106) by means of a circumferential, closed retaining collar (215).

## Revendications

1. Dispositif de traitement de pièces macroscopiques, avec un dispositif d'alimentation en air (112, 115) qui est monté sur une paroi de fermeture (106), un tambour de traitement (203) qui est en liaison fluidomécanique avec le dispositif d'alimentation en air (112, 115), avec une plaque intermédiaire (118) qui est disposée de manière fluidomécanique entre le dispositif d'alimentation en air (112, 115) et le tambour de traitement (203) et qui est pourvue d'un certain nombre d'évidements (121) permettant de former une liaison fluidomécanique entre le dispositif d'alimentation en air (112, 115) et le tambour de traitement (203), une surface totale des évidements (121) étant supérieure à une surface d'entrée (303) du dispositif d'alimentation en air (112, 115), **caractérisé en ce que** le dispositif d'alimentation en air (112, 115) comporte une pièce de déviation du flux d'entrée (115) conçue pour dévier l'air d'alimentation parallèlement à la plaque intermédiaire (118), en passant par une zone de sortie d'air (415), avec au moins une composante d'écoulement radiale dans un espace intermédiaire formé entre la paroi de fermeture (106) et la plaque intermédiaire (118), de sorte qu'il en résulte une répartition homogène du flux d'air d'alimentation dans l'espace intermédiaire.

2. Dispositif selon la revendication 1, **caractérisé en ce que** la pièce de déviation du flux d'entrée (115) est formée d'une pièce de col d'entrée (403) ainsi que d'une première pièce de col de sortie (409) et d'une deuxième pièce de col de sortie (412), les pièces de col de sortie (409, 412) étant disposées de manière angulaire par rapport à la pièce de col d'entrée (403).

3. Dispositif selon la revendication 1, **caractérisé en ce que** la pièce de déviation du flux d'entrée est formée d'un certain nombre de pièces de col d'entrée et d'un certain nombre de pièces de col de sortie, chaque pièce de col de sortie étant reliée de manière tubulaire à une pièce de col d'entrée et étant disposée perpendiculairement à la pièce de col d'entrée correspondante.

4. Dispositif selon l'une des revendications 1 à 3, **caractérisé en ce que** les évidements (121) sont répartis uniformément dans le sens circonférentiel des deux côtés du dispositif d'alimentation en air (112, 115).

5. Dispositif selon l'une des revendications 1 à 4, **caractérisé en ce que**, dans la zone du dispositif d'alimentation en air (112, 115), la plaque intermédiaire (118) est exempte d'évidements (121) dans une zone de confluence de flux d'air (503).

6. Dispositif selon l'une des revendications 1 à 5, **caractérisé en ce que** la surface totale des évidements (121) est légèrement supérieure à la surface d'entrée (303) du dispositif d'alimentation en air (112, 115).

7. Dispositif selon l'une des revendications 1 à 5, **caractérisé en ce qu'**il existe des éléments homogénéisateurs de débit (306) qui recouvrent les évidements (121).

8. Dispositif selon la revendication 7, **caractérisé en ce que** la surface totale des évidements (121) est plusieurs fois supérieure à la surface d'entrée (303) du dispositif d'alimentation en air (112, 115).

9. Dispositif selon l'une des revendications 1 à 8, **caractérisé en ce qu'**un bord extérieur (119) de la plaque intermédiaire (118) est relié de manière amovible à une paroi de fermeture (106) au moyen d'un collet de retenue (215) fermé s'étendant dans le sens périphérique.
